# Europäisches Patentamt

# European Patent Office

# Office européen des brevets

(19)

(11) Numéro de publication: **0 181 247**

**B1**

(12) # FASCICULE DE BREVET EUROPÉEN

(45) Date de publication du fascicule du brevet:
18.05.88

(51) Int. Cl.⁴: **B 29 C 55/06**

(21) Numéro de dépôt: **85401977.5**

(22) Date de dépôt: **10.10.85**

(54) Dispositif d'étirage longitudinal pour film en matière plastique.

(30) Priorité: **11.10.84 FR 8415586**

(43) Date de publication de la demande:
**14.05.86 Bulletin 86/20**

(45) Mention de la délivrance du brevet:
**18.05.88 Bulletin 88/20**

(84) Etats contractants désignés:
**AT CH DE GB IT LI NL SE**

(56) Documents cité:
**FR-A-2 535 297**
**US-A-3 585 097**

(73) Titulaire: **NEWTEC INTERNATIONAL, Boulevard Lepic, F-73106 Aix- les- Bains (FR)**

(72) Inventeur: **Thimon, Hubert, 102, avenue Marlioz, F-73100 Aix Les Bains (FR)**

(74) Mandataire: **Derambure, Christian, Cabinet BUGNION ASSOCIES SARL 116, boulevard Haussmann, F-75008 Paris (FR)**

LIBER, STOCKHOLM 1988

## Description

L'invention se rapporte à un dispositif d'étirage longitudinal pour film en matière plastique, pour application notamment dux appareils d'emballage.

On connaît, du document FR-A-2 535 297, correspondant au préambule de la revendication 1, un dispositif d'étirage comprenant un rouleau d'étirage entraîné à vitesse angulaire constante mais dans lequel on fait varier dans le temps la distance entre les génératrices d'appui du film et l'axe de rotation du film. Une telle disposition permet de faire varier le rapport d'étirage depuis un rapport 1 : 1 (c'est-à-dire absence d'étirage) jusqu'à un rapport maximum donné de manière continue. On a en effet besoin dans certaines applications d'une telle variation du rapport d'étirage, comme par exemple pour le banderolage de charges palettisées.

Cependant, ce mode d'étirage se prête mal à des réalisations mécaniques simples et satisfaisantes.

La présente invention a pour but de pallier ces inconvénients et, à cet effet, elle propose un dispositif d'étirage longitudinal pour film en matière plastique étirable, applicable plus spécialement aux appareils d'emballage, du type comprenant un rouleau d'étirage sur lequel est enroulé le film, notamment sur environ 180°, ce rouleau comportant une pluralité de génératrices disposées le long d'une enveloppe cylindrique d'axe XX, des moyens d'entraînement des génératrices en rotation autour de l'axe XX, et des moyens pour faire varier les vitesses angulaires des génératrices par rapport à l'axe XX pendant leur rotation autour de l'axe XX du fait des moyens d'entraînement, ce qui permet que les vitesses des génératrices aux points de sortie S et d'entrée E du film se trouvent dans un rapport correspondant au rapport d'étirage du film, caractérisé par le fait que les génératrices sont des barres fixées rigidement à l'une des extrémités de bras approximativement radiaux et à une distance uniforme R de l'axe XX d'un arbre, l'arbre comportant des couronnes ou équivalents sur lesquelles les bras sont, à leur autre extrémité, montés oscillants dans un plan perpendiculaire à l'arbre au moyen de pivots; et, par le fait que les moyens pour entraîner les génératrices en rotation et pour faire varier leur vitesse angulaire comprennent un arbre moteur d'axe YY entraînant en rotation, par l'intermédiaire de pignons, des couronnes d'axe ZZ décalé d'une distance d de l'axe XX de rotation des génératrices, les couronnes, à une distance r de l'axe ZZ, portant des fourreaux dans lesquels sont montés coulissant les bras, l'arbre étant entrainé en rotation à une vitesse égale à celle des couronnes grâce à des pignons ou équivalents.

L'invention sera maintenant décrite en se référant aux dessins annexés, dans lesquels:

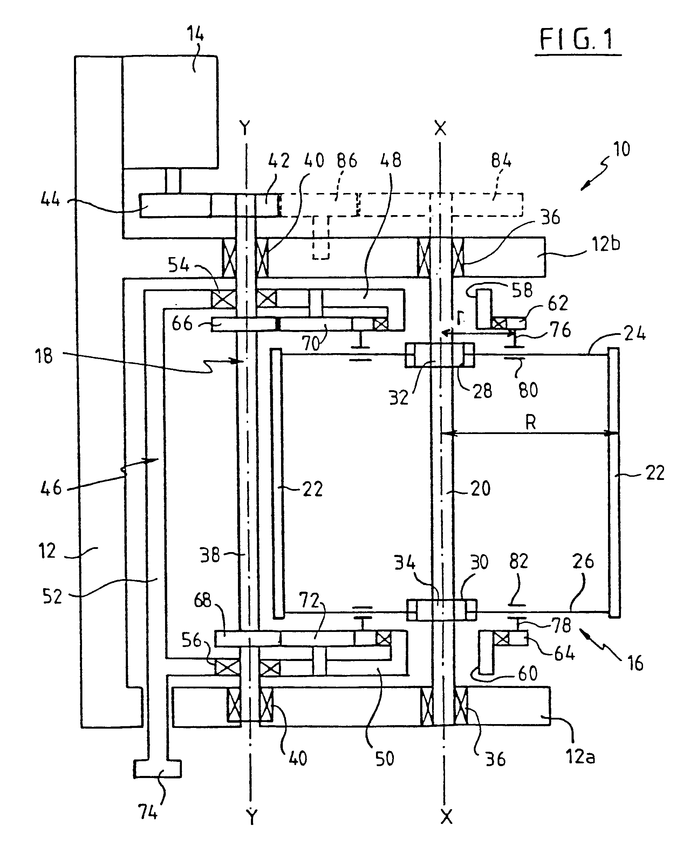

. la figure 1 est un vue latérale du dispositif selon l'invention;

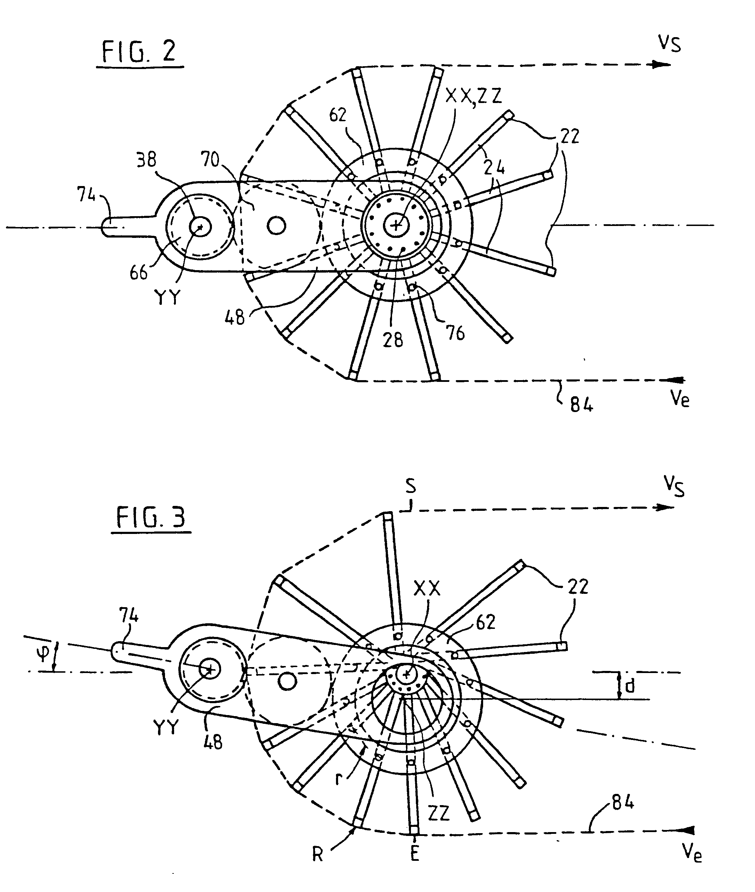

. la figure 2 est une vue de dessus, prise suivant la ligne II-II à la figure 1, dans une première position de fonctionnement; et

. la figure 3 est une vue similaire à celle de la figure 2, dans une seconde position de fonctionnement.

Le dispositif 10 représenté à la figure 1 comprend un bâti 12 sur lequel sont montés un moteur 14, un rouleau d'étirage 16 et un ensemble entraîneur-variateur 18.

Le rouleau d'étirage 16 comprend un arbre 20 autour duquel sont disposées un certain nombre de génératrices sous forme de barres 22, à une distance uniforme R de l'axe XX de l'arbre 20. De cette manière, les génératrices se trouvent disposées le long d'une enveloppe cylindrique. Les génératrices sont reliées à l'arbre 20 par des bras radiaux 24, 26 qui sont fixés rigidement aux génératrices à une extrémité et qui sont montés oscillants sur l'arbre 20 à l'autre extrémité de manière à pouvoir osciller dans un plan perpendiculaire à l'arbre.

Comme représenté, ce montage oscillant est assuré au moyen de pivots 28, 30 montés dans des couronnes 32, 34 de l'arbre 20, la distance entre les pivots et l'axe XX étant faible par rapport à R, de sorte que les bras 24, 26 sont disposés approximativement suivant des directions radiales par rapport à l'axe XX.

Enfin, l'arbre 20 tourillonne dans deux branches 12a, 12b, du bâti par l'intermédiaire de roulements 36.

De son côté, l'ensemble entraîneur-variateur 18 comprend un arbre moteur 38 également monté tourillonnant entre les branches 12a, 12b du bâti, avec roulements 40 interposés, l'arbre 38 étant situé à l'extérieur du cylindre défini par les génératrices 22. L'arbre moteur 38 est entraîné par le moteur 14 par coopération d'un pignon 44 en sortie du moteur et d'un pignon 42 fixé à l'extrémité de l'arbre 38.

Un équipage de variateur 46 est monté oscillant autour de l'axe YY de l'arbre 38 de la manière suivante: L'équipage 46 est composé de deux flasques 48, 50, situés entre les extrémités du rouleau 16 et les branches de bâti 12a, 12b, reliés regidement l'un à l'autre au moyen d'une entretoise 52, et montés sur l'arbre 38 avec roulements 54, 56 interposés.

Les flasques 48, 50 s'étendent essentiellement entre les arbres 38 et 20 et sont pourvus d'ouvertures 58, 60 entourant les 20 d'un diamètre suffisant pour permettre un certain débattement angulaire de l'équipage 46 autour de l'axe YY, comme il sera explicité plus loin.

Les flasques 48, 50 portent des couronnes tournantes 62, 64 qui sont dentées sur leur pourtour et sont entraînées en rotation par l'arbre 38 grâce à des pignons d'arbre 66, 68 et des pignons-relais 70, 72.

Un maneton 74 solidaire de l'entretoise 52 et des flasques 48, 50 permet de positionner en rotation l'équipage de variateur 46, soit manuellement, soit au moyen d'un dispositif d'asservissement (non représenté).

Les couronnes 62 et 64 coopèrent avec les bras 24, 26 de la manière suivante:

Chaque couronne 62 (resp. 64) porte des plots axiaux 76 (resp. 78) qui se terminent par des fourreaux 80 (resp. 82) dans lesquels coulissent les bras 24 (resp. 26). Les plots 76, 78 sont situés à une distance r de l'axe commun ZZ de la couronne 62 (resp. 69). Enfin, l'arbre 20 est entraîné à une vitesse de rotation égale à celle des couronnes 62, 64 au moyen de pignons 84, 86.

Le fonctionnement du dispositif sera maintenant explicité au moyen des figures 2 et 3.

Dans la position illustrée à la figure 2, l'équipage de variateur 46 a une orientation telle que l'axe XX et l'axe commun ZZ des couronnes 62, 64 sont confondus.

Les bras 24 sont alors régulièrement espacés d'une distance angulaire $\alpha = 2\pi/n$ (où n est le nombre de bras) puisque les pivots 28 et les plots 76 sont disposés sur des cercles concentriques.

Les bras, et donc les génératrices 22 tournent autour de l'axe XX à une vitesse angulaire constante et le film enroulé sur environ 180° autour du rouleau 16 a une vitesse de sortie $V_s$ égale à sa vitesse d'entrée $V_e$.

Dans cette situation, le rapport d'étirage est égal à 1 : 1, autrement dit, il n'y a pas d'étirage.

Dans la situation illustrée à la figure 3, on a fait pivoter l'équipage de variateur d'un angle $\varphi$ autour de l'axe YY par action sur le maneton 74, et l'axe commun ZZ des couronnes 62, 64 est décalé d'une distance d de l'axe XX. Les pivots 28 et les plots 76 ne sont plus disposés sur des cercles concentriques et les bras sont entraînés à vitesse angulaire variable lors de la rotation des couronnes 62, 64.

Plus précisément, on constate que les vitesses des génératrices aux points d'entrée E et de sortie S diamétralement opposés sont dans le rapport $V_s/V_e = r + d/r - d$.

On obtient donc un rapport d'étirage du film 84 égal à $r + d/r - d$.

En positionnant, les flasques 48, 50 en toute position intermédiaire entre les positions illustrées aux figures 2 et 3, on peut faire varier de manière continue la distance d depuis la valeur zéro jusqu'à une valeur $d_{max}$ fonction du diamètre des ouvertures 58, 60 et donc faire varier le rapport d'étirage depuis la valeur 1 : 1 jusqu'à la valeur $r + d_{max}/r - d_{max}$.

Pour obtenir un rapport d'étirage de 3, il suffit que $d_{max}$ soit egal à R/2.

On pourra naturellement concevoir de nombreuses variantes au dispositif qui vient d'être décrit.

En particulier, l'équipage de variateur 46 pourra être monté mobile en translation au lieu d'être monté oscillant comme il a été décrit.

En variante également, on pourra prévoir de maintenir l'équipage 46 fixe et de déplacer le bâti 12.

Enfin, l'entraînement de l'arbre 20 et des couronnes 62, 64 pourra être assuré par des moyens différents de ceux qui ont été représentés et décrits, comme par exemple des dispositifs à courroie, à chaîne, etc.

## Revendications

1. Dispositif d'étirage longitudinal pour film en matière plastique étirable, applicable plus spécialement aux appareils d'emballage, du type comprenant un rouleau d'étirage (16), sur lequel est enroulé le film, notamment sur environ 180°, ce rouleau (16) comportant une pluralité de génératrices (22) disposées le long d'une enveloppe cylindrique d'axe XX, des moyens d'entraînement des génératrices (22) en rotation autour de l'axe XX, et des moyens pour faire varier les vitesses angulaires des génératrices (22) par rapport à l'axe XX pendant leur rotation autour de l'axe XX du fait des moyens d'entraînement, ce qui permet que les vitesses des génératrices (22) aux points de sortie S et d'entrée E du film se trouvent dans un rapport correspondant au rapport d'étirage du film, caractérisé par le fait que les génératrices (22) sont des barres fixées rigidement à l'une des extrémités de bras (24, 26) approximativement radiaux et à une distance uniforme R de l'axe XX d'un arbre (20), l'arbre (20) comportant des couronnes (32, 34) ou équivalents sur lesquelles les bras (24, 26) sont, à leur autre extrémité, montés oscillants dans un plan perpendiculaire à l'arbre (20) au moyen de pivots (28, 30); et, par le fait que les moyens pour entraîner les génératrices (22) en rotation et pour faire varier leur vitesse angulaire comprennent un arbre moteur (38) d'axe YY entraînant en rotation, par l'intermédiaire de pignons (66, 68, 70, 72), des couronnes (62, 64) d'axe ZZ décalé d'une distance d de l'axe XX de rotation des génératrices (22), les couronnes (62, 64), à une distance r de l'axe ZZ, portant des fourreaux (80, 82) dans lesquels sont montés coulissant les bras (24, 25), l'arbre (20) étant entraîné en rotation à une vitesse égale à celle des couronnes (62, 64) grâce à des pignons (84, 86) ou équivalents.

2. Dispositif selon la revendication 1, caractérisé par le fait que les couronnes (62, 64) sont portées par des flasques (48, 50) d'un équipage de variateur (46) monté mobile, de façon relative, par rapport au bâti support de l'arbre (20), à pivotement ou en translation, de manière qu'en positionnant les flasques (48, 50), la distance d puisse varier entre 0 et une valeur d max pour lesquelles le rapport d'étirage est respectivement de 1 et de r + d max/r - d max.

3. Dispositif selon l'une quelconque des revendications 1, 2, caractérisé par le fait que la valeur maximale de la distance d entre l'axe XX de l'arbre (20) et l'axe ZZ des couronnes (62, 64) soit d max est égal à la moitié de la distance entre l'axe XX ou l'arbre (20) et les barres (22), soit R/2, de manière que le rapport d'étirage soit de 3.

4. Dispositif selon l'une quelconque des revendications 2 et 3, caractérisé par le fait que les flasques (48, 50) comportent des ouvertures (58, 60) entourant l'arbre (20) pour permettre un certain débattement de l'équipage, la distance maximale d max étant fonction des ouvertures (58, 60).

5. Dispositif selon l'une quelconque des revendications 1 à 4, caractérisé par le fait que l'arbre moteur (38) est situé à l'extérieur de l'enveloppe cylindrique d'axe XX définie par les génératrices (22).

6. Dispositif selon l'une quelconque des revendications 1 à 5, caractérisé par le fait qu'il comporte un bâti (12) ayant deux branches (12a, 12b) entre lesquelles tourillonnent l'arbre (20) et l'arbre (38).

7. Dispositif selon l'une quelconque des revendications 2 à 6, caractérisé par le fait que les flasques (48, 50) de l'équipage de variateur (46) sont montés sur l'arbre (38) de manière à autoriser un certain débattement angulaire.

8. Dispositif selon l'une quelconque des revendications 2 à 6, caractérisé par le fait que l'équipage de variateur (46) est monté mobile en translation.

9. Dispositif selon l'une quelconque des revendications 2 à 6, caractérisé par le fait que l'équipage de variateur (46) est fixe, le bâti (12) étant déplacé.

10. Dispostif selon l'une quelconque des revendications 2 à 9, caractérisé par le fait que l'équipage de variateur (46) est positionné, soit manuellement, soit au moyen d'un dispositif d'asservissement, grâce à un maneton solidaire de l'entretoise (52) reliant rigidement les deux flasques (48, 50).

**Patentansprüche**

Vorrichtung zum Längsstrecken eines Films aus streckbarem Kunststoff, insbesondere für Verpackungsmaschinen, einer Streckwalze (16), um die sich der Film über etwa 180° herumschlingt und die eine Vielzahl von Mantellinien (22), die längs eines zylindrischen Mantels einer Achse XX angeordnet sind, Mittel zum rotierenden Antreiben der Mantellinien (22) um die Achse XX und Mittel zum Ändern der Winkelgeschwindigkeiten der Mantellinien (22) bezüglich der Achse XX während ihrer Drehung um die Achse XX aufgrund der Antriebsmittel aufweist, so daß die Geschwindigkeiten der Mantollinien (22) an Stellen des Auslaufs S und denen des Einlaufs E des Films sich in einem Verhältnis entsprechend dem Verhältnis der Streckung des Films befinden, dadurch gekennzeichnet, daß die Mantellinion (22) Stäbe sind, die an einem der Enden von Armen (24, 26) etwa radial und in einem einheitlichen Abstand R von der Achse XX einer Spindel (20) starr befestigt sind, welche Spindel (20) Kränze (32, 34) oder dgl. aufweist, an denen die Arme (24, 26) mit ihrem anderen Ende mittels Drehzapfen (28, 30) in einer zur Spindel (20) senkrechten Ebene hin- und

herweglich befestigt sind; und daß die Mittel zum rotierendem Antreiben der Mantellinien (22) und zum Ändern ihrer Winkelgeschwindigkeit eine Antriebsspindel (38) mit einer Achse YY aufweist, die über Zahnräder (66, 68, 70, 72) Kränze (62, 64) rotierend antreibt, deren Achse ZZ um einen Abstand d von der Rotationsachse XX der Mantellinien (22) versetzt ist und welche Kränze (62, 64) in einem Abstand r von der Achse ZZ Buchsen (80, 82) besitzen, in denen die Arme (24, 25) gleitend gehalten sind, wobei die Spindel (20) aufgrund der Zahnräder (84, 86) oder dgl., mit einer Geschwindigkeit gleich derjenigen der Kränze (62, 64) rotierend angetrieben ist.

2. Vorrichtung nach Anspruch 1, dadurch gekennzeichnet, daß die Kränze (62, 64) durch Kurbelarme (48, 50) eines Verstellorgan (46) gehalten sind, das bezüglich eines Tragrahmens der Spindel (20) schwenkbar oder vorschiebbar beweglich befestigt ist, derart, daß beim Positionieren der Kurbelarme (48, 50) der Abstand d sich zwischen 0 und einem Wert d max ändern kann, für welche Werte das Streckverhältnis gleich 1 und r + d max/r - d max ist.

3. Vorrichtung nach Anspruch 1 oder 2, dadurch gekennzeichnet, daß der maximale Wert des Abstandes d zwischen der Achse XX der Spindel (20) und der Achse ZZ der Kränze (62, 64), der d max sei, gleich der Hälfte des Abstandes zwischen der Achse XX oder der Spindel (20) und den Stäben (22), der R/2 sei, ist, so daß das Streckverhältnis 3 ist.

4. Vorrichtung nach Anspruch 2 oder 3, dadurch gekennzeichnet, daß die Kurbelarme (48, 50) Öffnungen (58, 60) aufweisen, die die Spindel (20) umgeben, um eine gewisse Verschiebung des Organs zuzulassen, wobei der maximale Abstand d max von den Öffnungen (58, 60) abhängig ist.

5. Vorrichtung nach einem der Ansprüche 1 bis 4, dadurch gekennzeichnet, daß die Antriebsspindel (38) an der Außenseite des zylindrischen Mantels der Achse XX, der durch die Mantellinien (22) begrenzt ist, angeordnet ist.

6. Vorrichtung nach einem der Ansprüche 1 bis 5, dadurch gekennzeichnet, daß sie einen Tragrahmen (12) besitzt, der zwei Schenkel (12a, 12b) aufweist, zwichen denen sich die Spindel (20) und die Spindel (38) drehen.

7. Vorrichtung nach einem der Ansprüche 2 bis 6, dadurch gekennzeichnet, daß die Kurbelarme (48, 50) des Verstellorgans (46) an der Spindel (38) derart befestigt sind, daß eine gewisse winklige Verschiebung zugelassen ist.

8. Vorrichtung nach einem der Ansprüche 2 bis 6, dadurch gekennzeichnet, daß das Verstellorgan (46) verschiebbar gehalten ist.

9. Vorrichtung nach einem der Ansprüche 2 bis 6, dadurch gekennzeichnet, daß das Verstellorgan (46) fest ist, während der Tragrahmen verschiebbar ist.

10. Vorrichtung nach einem der Ansprüche 2 bis 3, dadurch gekennzeichnet, daß das Verstellorgan (46) von Hand oder mit Hilfe einer Steuerungsvorrichtung aufgrund eines mit einer Traverse (52) verbundenen Kurbelzapfens, der mit den Kurbelarmen (48, 50) starr verbunden ist, positioniert ist.

## Claims

1. Apparatus for longitudinally stretching plastics film, which is usable more particularly inpacking equipment, of the type comprising a stretching roller (16) on which the film is wound, more particularly about 180°, the roller (16) comprising a plurality of generices (22) disposed along a cylindrical envelope with the axis XX, means for driving the generatrices (22) in rotation about the axis XX, and means for adjusting the angular speed of the generatices (22) relative to the axis XX during their rotation about the axis XX by means of the driving means, which enables the speeds of the generatrices (22) in rotation at the entry points S and exit points E for the film to be in a ratio corresponding to the stretching ratio of the film, characterised in that the generatices (22) are secured rigidly to one of the ends of approximately radial arms (24, 26) and at a uniform distance R from the axis XX of a shaft (20), the shaft (20) comprising collars (32, 34) or the like on which the arms (24, 26) are mounted at their other end so as to pivot in a plane perpendicular to the shaft (20) by means of pivots (28, 30); and in that the means for driving the generatrices (22) in rotation and for adjusting their angular speed comprise a drive shaft (38) with the axis YY rotating, by means of pinions (66, 68, 70, 72), the collars (62, 64) having the axis ZZ offset at a distance $\underline{d}$ from the rotational axis XX of the generatices ($\overline{22}$), the collars (62, 64), at a distance r from the axis ZZ, supporting bushes (80, 82) in which the arms (24, 25) are mounted so as to slide, the shaft (20) being rotated at a speed equal to that of the collars (62, 64) by means of pinions (84, 86) or the like.

2. Apparatus according to claims 1, characterised in that the collars (62, 64) are supported by end plates (48, 50) of a variable-speed drive unit (46) displaceably mounted, relatively, relative to the support frame of the shaft (20), so as to pivot or to be displaceable, so that by positioning the end plates (48, 50), the distance d can vary between 0 and a value d maximum for which the stretching ratio is respectively 1 and r + d max/r - d max.

3. Apparatus according to either of claims 1, 2, characterised in that the maximum value of the distance d between the axis XX of the shaft (20) and the axis ZZ of the collars (62, 64) or d max equal to half the distance between the axis XX or the shaft (20) and the bars (22), or R/2, so that the stretching ratio is 3.

4. Apparatus according to either of claims 2, 3, characterised in that the end plates (48, 50) comprise openings surrounding the shaft (20) to alllow clearance for the unit, the maximum distance d max being a function of the openings (58, 60).

5. Apparatus according to any one of claims 1 to 4, characterised in that the drive shaft (38) is located at the end of the cylindrical envelope with the axis XX, defined by the generatrices (22).

6. Apparatus according to any one of claims 1 to 5, characterised in that it comprises a frame (12) having two branches (12a, 12b) between which the shaft (20) and the shaft (38) pivot.

7. Apparatus according to any one or claims 2 to 6, characterised in that the end plates (48, 50) of the variable-speed drive unit (46) are mounted on the shaft (38) so as to provide angular clearance.

8. Apparatus according to any one of claims 2 to 6, characterised in that the variable-speed drive unit (46) is displaceably mounted.

9. Apparatus according to any one of claims 2 to 6, characterised in that the variable-speed drive unit is fixed, the frams being displaced.

10. Apparatus according to any one of claims 2 to 9, characterised in that the variable-speed drive unit (46) is positioned either manually or by means of an automatic control device, by means of a crank pin rigid with the strut (52) rigiddly linking the two end plates (48, 50).

FIG.1

FIG. 2

FIG. 3